(19) Europäisches Patentamt
European Patent Office
Office européen des brevets

(11) **EP 4 246 615 A1**

(12) **EUROPEAN PATENT APPLICATION**
published in accordance with Art. 153(4) EPC

(43) Date of publication:
**20.09.2023 Bulletin 2023/38**

(21) Application number: **21891628.6**

(22) Date of filing: **22.10.2021**

(51) International Patent Classification (IPC):
**H01M 4/139** (2010.01)   **H01G 11/06** (2013.01)
**H01G 11/50** (2013.01)   **H01G 11/86** (2013.01)

(52) Cooperative Patent Classification (CPC):
**H01G 11/06; H01G 11/50; H01G 11/86;**
**H01M 4/139;** Y02E 60/10

(86) International application number:
**PCT/JP2021/039179**

(87) International publication number:
**WO 2022/102381 (19.05.2022 Gazette 2022/20)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.11.2020   JP 2020187146**

(71) Applicant: **Musashi Energy Solutions Co., Ltd.**
**Hokuto-shi, Yamanashi 409-1501 (JP)**

(72) Inventors:
• **YAKUSHIJI, Hiroki**
  **Hokuto-shi, Yamanashi 409-1501 (JP)**
• **YAMAMOTO, Masahiro**
  **Hokuto-shi, Yamanashi 409-1501 (JP)**
• **AITA, Kazunari**
  **Hokuto-shi, Yamanashi 409-1501 (JP)**

(74) Representative: **TBK**
**Bavariaring 4-6**
**80336 München (DE)**

(54) **MANUFACTURING METHOD FOR SECONDARY BATTERY AND MANUFACTURING METHOD FOR DOPED ELECTRODE**

(57)    Provided is a method for manufacturing a rechargeable battery by using a doped electrode containing an active material layer doped with an alkali metal. The doped electrode is manufactured by conveying an electrode including the active material layer along a path passing through a doping tank storing (i) a dope solution containing ions of the alkali metal and an aprotic organic solvent and (ii) a counter electrode member. The doped electrode exiting the doping tank is dried such that the doped electrode contains a component of the dope solution of 5 parts by mass or more and 40 parts by mass or less with respect to 100 parts by mass of the active material layer. The rechargeable battery is manufactured using the doped electrode dried.

FIG. 3

**Description**

CROSS-REFERENCE TO RELATED APPLICATION

This international application claims the benefit of Japanese Patent Application No. 2020-187146 filed on November 10, 2020 with the Japan Patent Office, and the entire disclosure of which is incorporated herein by reference.

TECHNICAL FIELD

The present disclosure relates to a method for manufacturing a rechargeable battery and a method for manufacturing a doped electrode.

BACKGROUND ART

In recent years, downsizing and weight reduction of electronic devices are remarkable, which further increases a demand for downsizing and weight reduction also of batteries used as drive power sources for driving the electronic devices.

To satisfy such a demand for downsizing and weight reduction, nonaqueous electrolyte rechargeable batteries, typified by a lithium-ion rechargeable battery, have been developed. As a power storage device applicable to a use that requires high energy density characteristics and high output characteristics, a lithium ion capacitor has been known. In addition, a sodium ion battery and a sodium ion capacitor, using sodium that is lower in cost and is richer in resource than lithium, have been also known.

A process of doping an electrode with an alkali metal in advance is adopted in these batteries and capacitors for various purposes. This process is generally called pre-doping. Example methods of pre-doping an electrode with an alkali metal include a continuous method. In the continuous method, the pre-doping is performed, with a strip-shaped electrode being transferred in a dope solution. The continuous method is disclosed in Patent Documents 1 to 4.

PRIOR ART DOCUMENTS

PATENT DOCUMENTS

Patent Document 1: Japanese Unexamined Application Publication No. 10-308212
Patent Document 2: Japanese Unexamined Application Publication No. 2008-77963
Patent Document 3: Japanese Unexamined Application Publication No. 2012-49543
Patent Document 4: Japanese Unexamined Application Publication No. 2012-49544

SUMMARY OF THE INVENTION

PROBLEMS TO BE SOLVED BY THE INVENTION

Hereinafter, an electrode including an active material layer doped with an alkali metal is referred to as "doped electrode". The doped electrode, which has exited a dope solution tank, has a component of the dope solution adhered. As a result of a research, the inventor has found that a rechargeable battery with a high battery stability can be manufactured by using a doped electrode to which a component of a dope solution is adhered in a suitable amount. In one aspect of the present disclosure, it is desirable to provide a method for manufacturing a rechargeable battery with a high battery stability and a method for manufacturing a doped electrode.

MEANS FOR SOLVING THE PROBLEMS

One aspect of the present disclosure is a method for manufacturing a rechargeable battery by using a doped electrode including an active material layer doped with an alkali metal. In the method for manufacturing a rechargeable battery, an electrode including the active material layer is conveyed along a path passing through a doping tank that stores (i) a dope solution containing ions of the alkali metal and an aprotic organic solvent and (ii) a counter electrode member, whereby the doped electrode is manufactured. Moreover, the doped electrode exiting the doping tank is dried such that the doped electrode contains a component of the dope solution of 5 parts by mass or more and 40 parts by mass or less with respect to 100 parts by mass of the active material layer. The rechargeable battery is manufactured using the dope electrode dried.

Such a manufacturing method allows manufacture of a rechargeable battery with a high battery stability.

Another aspect of the present disclosure is a method for manufacturing a doped electrode including an active material layer doped with an alkali metal. In the method for manufacturing a doped electrode, an electrode including the active material layer is conveyed along a path passing through a doping tank that stores (i) a dope solution containing ions of the alkali metal and an aprotic organic solvent and (ii) a counter electrode member, whereby the doped electrode is manufactured. The doped electrode exiting the doping tank is dried such that the doped electrode contains a component of the dope solution of 5 parts by mass or more and 40 parts by mass or less with respect to 100 parts by mass of the active material layer.

In the case of using the doped electrode manufactured by the method for manufacturing a doped electrode in another aspect of the present disclosure, a rechargeable battery with a high battery stability can be manufactured.

BRIEF DESCRIPTION OF THE DRAWINGS

FIG. 1 is a plan view illustrating a configuration of an electrode 1.
FIG. 2 is a sectional view illustrating a section along a line II-II in FIG. 1.
FIG. 3 is an explanatory diagram illustrating a configuration of an electrode manufacturing system 11.
FIG. 4 is an explanatory diagram illustrating a configuration of a doping tank 17.
FIG. 5 is an explanatory diagram illustrating configurations of counter electrode members 137, 139.

EXPLANATION OF REFERENCE NUMERALS

1···electrode, 1A···doped electrode, 3···current collector, 5···active material layer, 6···active material layer formed portion, 7···active material layer unformed portion, 11···electrode manufacturing system, 15···electrolyte solution treatment tank, 17, 19, 21···doping tank, 23A, 23B, 23C···cleaning tank, 25, 27, 29, 31, 33, 35, 37, 39, 40, 41, 43, 45, 46, 47, 49, 51, 52, 53, 55, 57, 58, 59, 61, 63, 64, 65, 67, 69, 70, 71, 73, 75, 77, 79, 81, 83, 85, 87, 89, 91, 93, 201, 203, 205, 207, 209, 211···conveyor roller, 101···supply roll, 103···winding roll, 105···supporting platform, 107···circulation filter, 109, 110, 111, 112, 113, 114···power source, 117···tab cleaner, 119···collection section, 121···end sensor, 131···upstream tank, 133···downstream tank, 137, 139, 141, 143···counter electrode member, 149, 151···space, 153···conductive base material, 155···alkali metal-containing plate, 157···porous insulating member, 161···filter, 163···pump, 165···pipe, 213···blower

MODE FOR CARRYING OUT THE INVENTION

Example embodiments of the present disclosure will be described with reference to the drawings.

<First Embodiment>

1. Configuration of Electrode 1

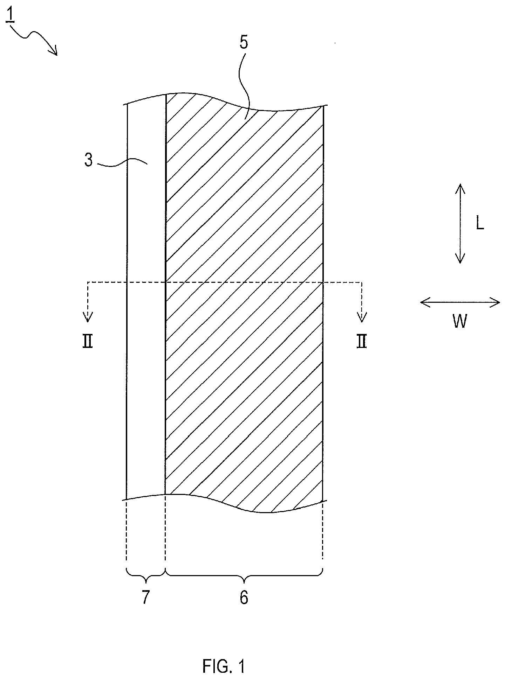

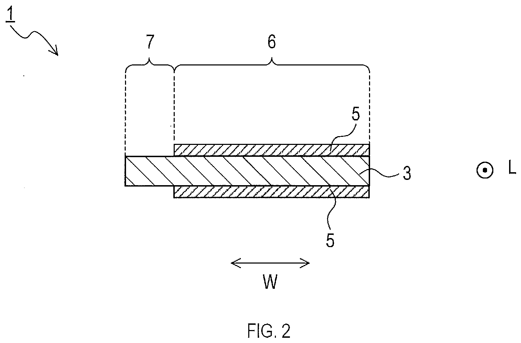

Reference is made to FIGS. 1 and 2 to describe a configuration of the electrode 1. The electrode 1 has a strip-shape. The electrode 1 comprises a current collector 3 and active material layers 5. The current collector 3 has a strip-shape. The active material layers 5 are formed on respective opposing sides of the current collector 3.

The electrode 1 has a surface including an active material layer formed portion 6 and an active material layer unformed portion 7. The active material layer formed portion 6 is a portion where each active material layer 5 has been formed. The active material layer unformed portion 7 is a portion where each active material layer 5 has not been formed. In the active material layer unformed portion 7, the current collector 3 is exposed.

The active material layer unformed portion 7 is in the form of a strip extending in a longitudinal direction L of the electrode 1. The active material layer unformed portion 7 is located in an end of the electrode 1 in a width direction W of the electrode 1.

Preferably, examples of the current collector 3 include a metal foil such as copper, nickel, stainless steel, or the like. The current collector 3 may have a conductive layer, containing a carbon material as a main component, formed on the metal foil. The current collector 3 has a thickness of, for example, from 5 $\mu$m to 50 $\mu$m.

The active material layer 5 can be prepared, for example, by applying a slurry containing an active material, a binder, and the like onto the current collector 3, and drying the slurry applied.

Examples of the binder include a rubber-based binder, fluorine-containing resin, polypropylene, polyethylene, and fluorine modified (meth) acrylic binder as disclosed in Japanese Unexamined Patent Application Publication No. 2009-246137. Examples of the rubber-based binder include styrene-butadiene rubber (SBR) and nitrile butadiene rubber (NBR). Furthermore, examples of the fluorine-containing resin include polytetrafluoroethylene and polyvinylidene fluoride.

In addition to the active material and the binder, the slurry may contain a different component. Examples of the different component include a conductive agent and a thickener. Examples of the conductive agent include carbon black; graphite; vapor-grown carbon fiber; and metal powder. Examples of the thickener include carboxymethyl cellulose; sodium salt or ammonium salt of carboxymethyl cellulose; methyl cellulose; hydroxymethyl cellulose; ethyl cellulose; hydroxypropyl cellulose; polyvinyl alcohol; oxidized starch; phosphorylated starch; and casein.

The active material layer 5 is not particularly limited in its thickness. The active material layer 5 has a thickness of, for example, from 5 $\mu$m to 500 $\mu$m, preferably from 10 $\mu$m to 200 $\mu$m, and particularly preferably from 10 $\mu$m to 100 $\mu$m. The active material contained in the active material layer 5 may be any electrode active material, without particular limitations, that is applicable to a battery or a capacitor using insertion and de-insertion of alkali metal ions. The active material may be a negative electrode active material or a positive electrode active material.

The negative electrode active material is not particularly limited. Examples of the negative electrode active material include a carbon material such as a composite carbon material; and metal or semimetal such as Si and Sn that can be alloyed with lithium, or a material including an oxide of the metal or the semimetal. Examples of the composite carbon material include graphite; easily-graphitizable carbon; hardly graphitizable carbon; and a composite carbon material made by coating graphite particles with carbides of pitch and resin. Specific examples of the carbon material include the carbon material disclosed in Japanese Unexamined Patent Application Publication No. 2013-258392. Specific examples of the metal or the semimetal that can be alloyed with lithium, or the material including the oxide of the metal or the semimetal include the materials disclosed in Japanese Unexamined Patent Application Publication Nos. 2005-123175 and 2006-107795.

Examples of the positive electrode active material include a transition metal oxide and a sulfur-based active material. Examples of the transition metal oxide include a cobalt oxide; a nickel oxide; a manganese oxide; and a vanadium oxide. Examples of the sulfur-based active material include elemental sulfur and a metal sulfide. Both the positive electrode active material and the negative electrode active material may be made of a single substance or made by mixing two or more substances.

The active material contained in the active material layer 5 is pre-doped with an alkali metal using an electrode manufacturing system 11 to be described later. As the alkali metal to be pre-doped into the active material, lithium or sodium is preferable, and lithium is particularly preferable. When the electrode 1 is used to manufacture an electrode for a lithium-ion rechargeable battery, the active material layer 5 has a density of preferably from 1.30 g/cc to 2.00 g/cc, and particularly preferably from 1.40 g/cc to 1.90 g/cc.

2. Configuration of Electrode Manufacturing System 11

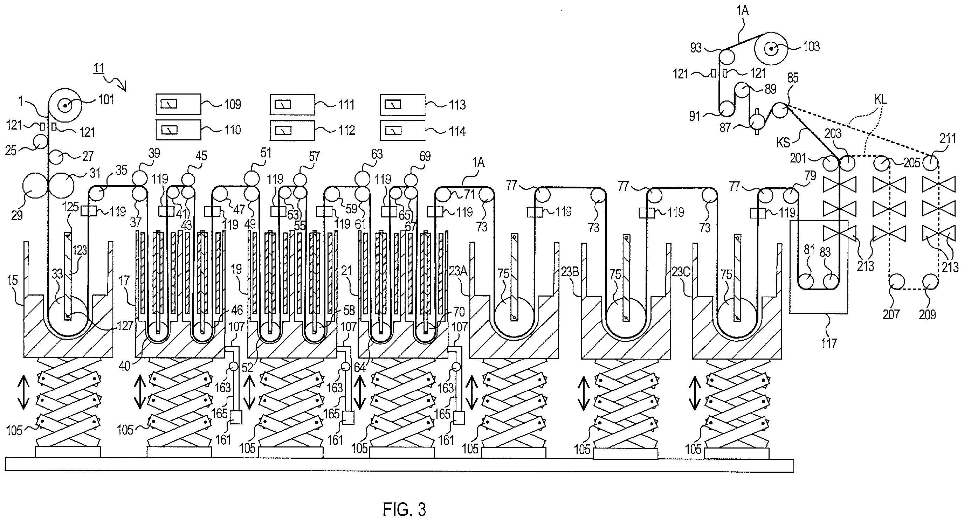

Reference is made to FIGS. 3 to 5 to describe a configuration of the electrode manufacturing system 11. As illustrated in FIG. 3, the electrode manufacturing system 11 comprises an electrolyte solution treatment tank 15; doping tanks 17, 19, 21; cleaning tanks 23A, 23B, 23C; conveyor rollers 25, 27, 29, 31, 33, 35, 37, 39, 40, 41, 43, 45, 46, 47, 49, 51, 52, 53, 55, 57, 58, 59, 61, 63, 64, 65, 67, 69, 70, 71, 73, 75, 77, 79, 81, 83, 85, 87, 89, 91, 93, 201, 203, 205, 207, 209, 211; a supply roll 101; a winding roll 103; a supporting platform 105; a circulation filter 107; six power sources 109, 110, 111, 112, 113, 114; a tab cleaner 117, a collection section 119; an end sensor 121; and a blower 213. Hereinafter, the conveyer rollers described above can be collectively referred to as "group of conveyor rollers".

The electrolyte solution treatment tank 15 is a square tank opened upwards. The electrolyte solution treatment tank 15 has a bottom surface having a substantially U-shape configuration in a cross-section. The electrolyte solution treatment tank 15 comprises a partition plate 123. The partition plate 123 is supported by a supporting rod 125 that penetrates through an upper end of the partition plate 123. The supporting rod 125 is fixed to a wall or the like, which is not shown. The partition plate 123 extends in an up-down direction so as to divide an inner part of the electrolyte solution treatment tank 15 into two spaces.

The partition plate 123 include a lower end attached to the conveyor roller 33. The partition plate 123 and the conveyor roller 33 are supported by a supporting rod 127 that penetrates through the partition plate 123 and the conveyor roller 33. The partition plate 123 includes a part, adjacent to the lower end thereof, cut out so as not to contact the conveyor roller 33. There is a space between the conveyor roller 33 and the bottom surface of the electrolyte solution treatment tank 15.

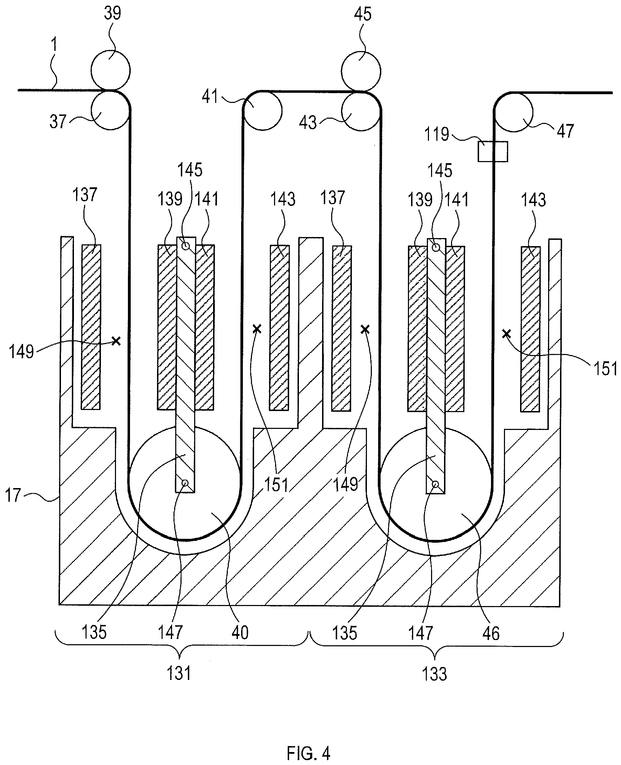

Reference is made to FIG. 4 to describe a configuration of the doping tank 17. The doping tank 17 comprises an upstream tank 131 and a downstream tank 133. The upstream tank 131 is arranged closer to the supply roll 101 relative to the downstream tank 133, and the downstream tank 133 is arranged closer to the winding roll 103 relative to the upstream tank 131. Hereinafter, a part of a certain element closer to the supply roll 101 is referred to as "upstream part", and a part of this element closer to the winding roll 103 is referred to as "downstream part".

A description is given to a configuration of the upstream tank 131. The upstream tank 131 is a square tank opened upwards. The upstream tank 131 has a bottom surface having a substantially U-shape configuration in a cross-section. The upstream tank 131 comprises a partition plate 135 and four counter electrode members 137, 139, 141, 143.

The partition plate 135 is supported by a supporting rod 145 that penetrates through an upper end of the partition plate 135. The supporting rod 145 is fixed to a wall or the like, which is not shown. The partition plate 135 extends in the up-down direction so as to divide an inner part of the upstream tank 131 into two spaces. The partition plate 135 includes a lower end attached to the conveyor roller 40. The partition plate 135 and the conveyor roller 40 are supported by a supporting rod 147 that penetrates through the partition plate 135 and the conveyer roller 40. The partition plate 135 includes a part, adjacent to the lower end thereof, cut out so as not to contact the conveyor roller 40. There is a space between the conveyor roller 40 and the bottom surface of the upstream tank 131.

The counter electrode member 137 is arranged in the upstream part of the upstream tank 131. The counter electrode members 139 and 141 are arranged so as to interpose the partition plate 135 on both sides of the partition plate 135. The counter electrode member 143 is arranged in the downstream part of the upstream tank 131.

There is a space 149 between the counter electrode member 137 and the counter electrode member 139. There is a space 151 between the counter electrode member 141 and the counter electrode member 143. The counter electrode members 137, 139, 141, 143 are connected to one electrode of the power source 109.

The counter electrode members 137, 139, 141, 143 may be connected to respective power sources different from one another. In this case, each of the counter electrode members 137, 139, 141, 143 can be controlled. Furthermore, each of the counter electrode members 137, 139, 141, 143 is easily electrically adjusted in accordance with a dope condition of the electrode 1 during a dope process. Consequently, a doped electrode 1A is easily manufactured as desired. The doped electrode 1A is the electrode 1 including the active material layers 5 that have been doped with the alkali metal.

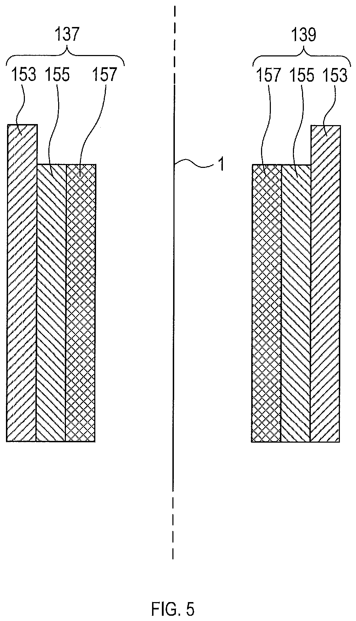

The counter electrode members 137, 139, 141, 143 have the same configuration. Reference is made to FIG. 5 to describe the configuration of the counter electrode members 137, 139.

Each of the counter electrode members 137, 139 has a layered structure comprising a conductive base material 153, an alkali metal-containing plate 155, and a porous insulating member 157. Example materials of the conductive base material 153 include copper, stainless steel, and nickel. The form of the alkali metal-containing plate 155 is not particularly limited, and example forms include an alkali metal plate and an alkali metal alloy plate. The alkali metal-containing plate 155 has a thickness of, for example, from 0.03 mm to 6 mm.

The porous insulating member 157 has a plate-shape. The porous insulating member 157 is layered on the alkali metal-containing plate 155. The plate-shape of the porous insulating member 157 is rendered when the porous insulating member 157 is layered on the alkali metal-containing plate 155. The porous insulating member 157 may be a member that retains a certain shape by itself, or may be an easily deformable member such as a net.

The porous insulating member 157 is a porous material; and therefore allows a dope solution, which will be explained later, to pass through the porous insulating member 157. This allows the alkali metal-containing plate 155 to contact the dope solution.

Examples of the porous insulating member 157 include a resin mesh. Examples of the resin include polyethylene, polypropylene, nylon, polyetheretherketone, and polytetrafluoroethylene. An opening of the mesh can be appropriately determined. The opening of the mesh is, for example, from 0.1 μm to 10 mm, and preferably from 0.1 mm to 5 mm. A thickness of the mesh can be appropriately determined. The thickness of the mesh is, for example, from 1 μm to 10 mm, and preferably from 30 μm to 1 mm. An opening ratio of the mesh can be appropriately determined. The opening ratio of the mesh is, for example, from 5% to 98%, preferably from 5% to 95%, and more preferably from 50% to 95%.

The porous insulating member 157 may be entirely made from an insulating material, or may partly include an insulating layer.

The downstream tank 133 basically has a configuration similar to the configuration of the upstream tank 131, except that the conveyor roller 46 is situated inside the downstream tank 133 instead of the conveyor roller 40. The counter electrode members 137, 139, 141, 143 included in the downstream tank 133 are connected to one electrode of the power source 110.

The doping tank 19 has a configuration basically similar to the configuration of the doping tank 17, except that the conveyor rollers 52, 58 are situated inside the doping tank 19 instead of the conveyor rollers 40, 46. The counter electrode members 137, 139, 141, 143 included in the upstream tank 131 of the doping tank 19 are connected to one electrode of the power source 111. The counter electrode members 137, 139, 141, 143 included in the downstream tank 133 of the doping tank 19 are connected to one electrode of the power source 112.

The doping tank 21 has a configuration basically similar to the configuration of the doping tank 17, except that the conveyor rollers 64, 70 are situated inside the doping tank 21 instead of the conveyor rollers 40, 46. The counter electrode members 137, 139, 141, 143 included in the upstream tank 131 of the doping tank 21 are connected to one electrode of the power source 113. The counter electrode members 137, 139, 141, 143 included in the downstream tank 133 of the doping tank 21 are connected to one electrode of the power source 114.

Each of the cleaning tanks 23A, 23B, 23C has a configuration basically similar to the configuration of the electrolyte solution treatment tank 15, except that the conveyor roller 75 is situated inside each of the cleaning tanks 23A, 23B, 23C instead of the conveyor roller 33.

As the electrode 1 passes through the doping tank 21, the dope solution taken from the doping tank 21 is adhered to the electrode 1. The dope solution adhering to the electrode 1 is efficiently removed in the cleaning tanks 23A, 23B, 23C. Thus, the electrode 1 can be easily handled in the next process.

Each of the cleaning tanks 23A, 23B, 23C stores, for example, a cleaning solution as follows. The cleaning solution is preferably an organic solvent, and preferably contains an aprotic solvent having a boiling point of 150°C or lower under 1 atmosphere (atm). Examples of the aprotic solvent having a boiling point of 150°C or lower under 1 atm include at least one selected from a carbonate-based solvent, an ester-based solvent, an ether-based solvent, a hydrocarbon-based solvent, a keton-based solvent, or a nitrile-based solvent. Among these examples, the carbonate-based solvent is preferable. The carbonate-based solvent is particularly preferably at least one selected from dimethyl carbonate, diethyl carbonate, methyl propyl carbonate, or ethyl methyl carbonate. Using the cleaning solution as above makes it easy to remove the cleaning solution from the electrode 1 cleaned.

The dope solution taken from the doping tank 21 is accumulated in each of the cleaning tanks 23A, 23B, 23C. Thus, it is preferable to keep the quality of the cleaning solution at a constant level by, for example, adding or replacing with another cleaning solution. Methods of keeping track of the quality of the cleaning solution include placing a sensor such as an ohmmeter and/or a conductivity meter in each of the cleaning tanks 23A, 23B, 23C and regularly observing a value to be measured by these sensors.

In the group of conveyor rollers, the conveyor rollers 37, 39, 43, 45, 49, 51, 55, 57, 61, 63, 67, 69 are made of an electrically conductive material. The conveyor rollers 37, 39, 43, 45, 49, 51, 55, 57, 61, 63, 67, 69 correspond to an electrically conductive power-supply roller. Examples of the electrically conductive material include stainless steel, gold, copper, and rhodium. The electrically conductive material is particularly preferably copper. The electrically conductive material may be a material made by mixing two or more substances. When the electrically conductive material is contained particularly in a surface of the power-supply roller, a reaction between the doped electrode 1A and the power-supply roller can be easily reduced. Consequently, mass production of a highly-quality doped electrode 1A can be achieved.

Other conveyor rollers in the group of conveyor rollers, except for shaft portions thereof, are made of elastomer. The group of conveyor rollers conveys the electrode 1 along a specific path. The path to convey the electrode 1 by the group of conveyor rollers include a cleaning path and a cleaning-omitted path. The cleaning path starts from the supply roll 101 to the winding roll 103 sequentially through the electrolyte solution treatment tank 15, the doping tank 17, the doping tank 19, the doping tank 21, at least one of the cleaning tanks 23A, 23B, or 23C, and the tab cleaner 117. The number of cleaning tanks through which the doped electrode 1A is to pass in the cleaning path can be freely selected from one to three.

The cleaning-omitted path is basically similar to the cleaning path, except that the cleaning-omitted path passes through the doping tank 21 to the tab cleaner 117 without passing through the cleaning tanks 23A, 23B, 23C.

Both the cleaning path and the cleaning-omitted path include two kinds of paths subsequent to passage through the tab cleaner 117. One path is a path to convey the doped electrode 1A, which has passed through the tab cleaner 117, by the conveyor rollers 201, 203, 205, 207, 209, 211, and subsequently by the conveyor rollers 85, 87, 89, 91, 93. Hereinafter, this path is referred to as "long-distance drying path KL".

The other path is a path to convey the doped electrode 1A, which has passed through the tab cleaner 117, by the conveyor rollers 201, 203 and thereafter by the conveyor rollers 85, 87, 89, 91, 93. Hereinafter, this path is referred to as "short-distance drying path KS".

The path to convey the electrode 1 by the group of conveyor rollers includes a part passing through the electrolyte solution treatment tank 15. The part is a path where the electrode 1 begins with a downward travel through the conveyor rollers 29, 31, and then has its travelling direction changed upward by the conveyor roller 33.

The path to convey the electrode 1 by the group of conveyor rollers includes a part passing through the doping tank 17 as follows. In the part passing through the doping tank 17, the electrode 1 has its travelling direction changed downward by the conveyor roller 37 to thereby travel downward in the space 149 of the upstream tank 131. Subsequently, the electrode 1 has its travelling direction changed upward by the conveyor roller 40 to thereby travel upward in the space 151 of the upstream tank 131. Subsequently, the electrode 1 has its travelling direction changed downward by the conveyor rollers 41, 43 to thereby travel downward in the space 149 of the downstream tank 133. Subsequently, the electrode 1 has its travelling direction changed upward by the conveyor roller 46 to thereby travel upward in the space 151 of the downstream tank 133. Finally, the electrode 1 has its travelling direction changed horizontally by the conveyor roller 47 to thereby travel toward the doping tank 19.

The path to convey the electrode 1 by the group of conveyor rollers includes a part passing through the doping tank 19 as follows. In the path passing through the doping tank 19, the electrode 1 has its travelling direction changed downward by the conveyor roller 49 to thereby travel downward in the space 149 of the upstream tank 131. Subsequently, the electrode 1 has its travelling direction changed upward by the conveyor roller 52 to thereby travel upward in the space 151 of the upstream tank 131. Subsequently, the electrode 1 has its travelling direction changed downward by the conveyor rollers 53, 55 to thereby travel downward in the space 149 of the downstream tank 133. Subsequently, the electrode 1 has its travelling direction changed upward by the conveyor roller 58 to thereby travel upward in the space 151 of the downstream tank 133. Finally, the electrode 1 has its travelling direction changed horizontally by the conveyor roller 59 to thereby travel toward the doping tank 21.

The path to convey the electrode 1 by the group of conveyor rollers include a part passing through the doping tank 21 as follows. In the part passing through the doping tank 21, the electrode 1 has its travelling direction changed downward by the conveyor roller 61 to thereby travel downward in the space 149 of the upstream tank 131. Subsequently, the electrode 1 has its travelling direction changed upward by the conveyor roller 64 to thereby travel upward in the space 151 of the upstream tank 131. Subsequently, the electrode 1 has its travelling direction changed downward by the conveyor rollers 65, 67 to thereby travel downward in the space 149 of the downstream tank 133. Subsequently, the electrode 1 has its travelling direction changed upward by the conveyor roller 70 to thereby travel upward in the space 151 of the downstream tank 133. Finally, the electrode 1 has its travelling direction changed horizontally by the conveyor roller 71 to thereby travel toward the cleaning tank 23.

The cleaning path includes a part passing through the cleaning tanks 23A, 23B, 23C. This part is a path where the doped electrode 1A has its travelling direction changed downward by the conveyor roller 73 to thereby travel downward and subsequently has its travelling direction changed upward by the conveyor roller 75.

The supply roll 101 is wound with the electrode 1. That is, the supply roll 101 holds the electrode 1, which is in a wound-up state. The active material in the electrode 1 held by the supply roll 101 is not yet doped with the alkali metal.

The group of conveyor rollers draws out and conveys the electrode 1 held by the supply roll 101. The winding roll 103 winds up and keeps the electrode 1 conveyed by the group of conveyor rollers. During the electrode 1 being conveyed along the path passing through the doping tanks 17, 19, 21, the active material layers 5 are doped with the alkali metal. A method of doping with the alkali metal includes electrically doping the active material with the alkali metal inside the doping tanks 17, 19, 21 using the counter electrode members 139, 141, 143 arranged to face the electrode 1. Doping the active material layers 5 with the alkali metal turns the electrode 1 into the doped electrode 1A including the active material layers 5 doped with the alkali metal. The electrode 1 kept by the winding roll 103 is the doped electrode 1A.

The supporting platform 105 supports the electrolyte solution treatment tank 15, the doping tanks 17, 19, 21, and the cleaning tanks 23A, 23B, 23C from below. The supporting platform 105 has a height that can be changed. The circulation filter 107 is provided to each of the doping tanks 17, 19, 21. The circulation filter 107 comprises a filter 161, a pump 163, and a pipe 165.

In the circulation filter 107 provided to the doping tank 17, the pipe 165 is a circulation pipe that defines a flow path extending from the doping tank 17, sequentially passing through the pump 163 and the filter 161, and then returning to the doping tank 17. The dope solution inside the doping tank 17 circulates through the pipe 165 and the filter 161 by a driving force of the pump 163, and returns to the doping tank 17. During this period, foreign matters and the like in the dope solution is filtered by the filter 161. Examples of the foreign matters include foreign matters precipitated from the dope solution and foreign matters generated from the electrode 1. The material of the filter 161 is, for example, resin such as polypropylene and polytetrafluoroethylene. The pore size of the filter 161 can be appropriately determined, for example, 0.2 $\mu$m or greater and 50 $\mu$m or smaller.

The circulation filter 107 provided to the doping tanks 19, 21 each also have the same configuration and exhibit the same operation effect. In FIGS. 3 and 4, illustration of the dope solution is omitted for the purpose of convenience.

The power source 109 includes a first terminal coupled to the conveyor rollers 37, 39. The power source 109 includes a second terminal coupled to the counter electrode members 137, 139, 141, 143 provided to the upstream tank 131 of the doping tank 17. The electrode 1 contacts the conveyor rollers 37, 39. The electrode 1 and the counter electrode members 137, 139, 141, 143 are submerged in the dope solution, which is an electrolyte solution. Thus, in the upstream tank 131 of the doping tank 17, the electrode 1 and the counter electrode members 137, 139, 141, 143 are electrically coupled to one another via the electrolyte solution.

The power source 110 includes a first terminal coupled to the conveyor rollers 43, 45. The power source 110 includes a second terminal coupled to the counter electrode members 137, 139, 141, 143 provided to the downstream tank 133 of the doping tank 17. The electrode 1 contacts the conveyor rollers 43, 45. The electrode 1 and the counter electrode members 137, 139, 141, 143 are submerged in the dope solution, which is an electrolyte solution. Thus, in the downstream tank 133 of the doping tank 17, the electrode 1 and the counter electrode members 137, 139, 141, 143 are electrically coupled to one another via the electrolyte solution.

The power source 111 includes a first terminal coupled to the conveyor rollers 49, 51. The power source 111 includes a second terminal coupled to the counter electrode members 137, 139, 141, 143 provided to the upstream tank 131 of the doping tank 19. The electrode 1 contacts the conveyor rollers 49, 51. The electrode 1 and the counter electrode members 137, 139, 141, 143 are submerged in the dope solution, which is an electrolyte solution. Thus, in the upstream tank 131 of the doping tank 19, the electrode 1 and the counter electrode members 137, 139, 141, 143 are electrically coupled to one another via the electrolyte solution.

The power source 112 includes a first terminal coupled to the conveyor rollers 55, 57. The power source 112 includes a second terminal coupled to the counter electrode members 137, 139, 141, 143 provided to the downstream tank 133 of the doping tank 19. The electrode 1 contacts the conveyor rollers 55, 57. The electrode 1 and the counter electrode members 137, 139, 141, 143 are submerged in the dope solution, which is an electrolyte solution. Thus, in the downstream tank 133 of the doping tank 19, the electrode 1 and the counter electrode members 137, 139, 141, 143 are electrically coupled to one another via the electrolyte solution.

The power source 113 includes a first terminal coupled to the conveyor rollers 61, 63. The power source 113 includes a second terminal coupled to the counter electrode members 137, 139, 141, 143 provided to the upstream tank 131 of the doping tank 21. The electrode 1 contacts the conveyor rollers 61, 63. The electrode 1 and the counter electrode members 137, 139, 141, 143 are submerged in the dope solution, which is an electrolyte solution. Thus, in the upstream tank 131 of the doping tank 21, the electrode 1 and the counter electrode members 137, 139, 141, 143 are electrically coupled to one another via the electrolyte solution.

The power source 114 includes a first terminal coupled to the conveyor rollers 67, 69. The power source 114 includes a second terminal coupled to the counter electrode members 137, 139, 141, 143 provided to the downstream tank 133 of the doping tank 21. The electrode 1 contacts the conveyor rollers 67, 69. The electrode 1 and the counter electrode members 137, 139, 141, 143 are submerged in the dope solution, which is an electrolyte solution. Thus, in the downstream tank 133 of the doping tank 21, the electrode 1 and the counter electrode members 137, 139, 141, 143 are electrically coupled to one another via the electrolyte solution.

The tab cleaner 117 cleans the active material layer unformed portion 7 of the doped electrode 1A. In a case where there is, on the active material layer unformed portion 7 of the doped electrode 1A, a residual organic component derived from the dope solution or the like, a weld defect is prone to occur when the active material layer unformed portion 7 is welded.

The cleaning by the tab cleaner 117 can be followed by measurement of an amount of the residual organic component on the active material layer unformed portion 7. Examples of a measurement method include the attenuated total reflection-Fourier transform infrared spectroscopy. The characteristic peak of the residual organic component is observed in the range of wavenumbers of $1180\,\mathrm{cm}^{-1}$ to $1250\,\mathrm{cm}^{-1}$. The amount of the residual organic component can be measured based on a value of an absorbance peak area in this range.

The cleaning by the tab cleaner 117 can be followed by quality evaluation with respect to the doped electrode 1A based on the amount of the residual organic component on the active material layer unformed portion 7. The quality evaluation with respect to the doped electrode 1A can be performed based on, for example, whether the value of the absorbance peak area in the range of wavenumbers of $1180\,\mathrm{cm}^{-1}$ to $1250\,\mathrm{cm}^{-1}$ is 0.1 or less. When the value of the absorbance peak area is 0.1 or less, the active material layer unformed portion 7 can be determined to be sufficiently cleaned.

The collection section 119 is arranged for each of the electrolyte solution treatment tank 15, the doping tanks 17, 19, 21, and the cleaning tanks 23A, 23B, 23C. The collection section 119 collects a solution taken by the electrode 1 from each doping tank and returns the same to corresponding one doping tank.

The end sensor 121 detects a position of an end of the electrode 1 in the width direction W. Based on a detection result of the end sensor 121, a not-shown end position adjustor adjusts positions of the supply roll 101 and the winding roll 103 in the width direction W.

There are two or more blowers 213. The two or more blowers 213 are provided in an aligned manner along the path to convey the doped electrode 1A. One blower of or some blowers of the two or more blowers 213 blow gas to the doped electrode 1A during conveyance of the doped electrode 1A regardless of whether the path for the doped electrode 1A is the long-distance drying path KL or the short-distance drying path KS. The other blower or other blowers 213 blow gas to the doped electrode 1A during the doped electrode 1A being conveyed along the long-distance drying path KL. Thus, when the path for the doped electrode 1A is the long-distance drying path KL, the gas is blown to the doped electrode 1A for a longer period of time as compared to a case where the path for the doped electrode 1A is the short-distance drying path KS.

The gas to be blown from the two or more blowers 213 is preferably a gas inactive to an active material doped with the alkali metal. Examples of such a gas include helium gas, neon gas, argon gas, nitrogen gas, and dehumidified air that has moisture removed. The gas may consist of a single component. Alternatively, the gas may be a mixed gas consisting of two or more kinds of components.

When the doped electrode 1A passes through the tab cleaner 117 in a state where the cleaning-omitted path is selected, the dope solution remains deposited on the surface of the doped electrode 1A. Due to the two or more blowers 213 blowing the gas to the doped electrode 1A, a solvent of the dope solution evaporates. On the surface of the doped electrode 1A, there remains the component of the dope solution, which is hereinafter referred to as "residual component". The residual component is a residue of one or more components contained in the dope solution deposited on the doped electrode 1A. Most of the residual component can be removed from the doped electrode 1A by cleaning the doped electrode 1A. Thus, the residual component has a mass approximately equal to a mass per unit area (a) of the solvent, which will be described later.

3. Composition of Dope Solution

When the electrode manufacturing system 11 is used, the dope solution is stored in the electrolyte solution treatment tank 15 and the doping tanks 17, 19, 21. The dope solution includes alkali metal ions and a solvent. The dope solution is an electrolyte solution.

Examples of the solvent include an organic solvent. The organic solvent is preferably an aprotic organic solvent. Examples of the aprotic organic solvent include dimethyl carbonate, diethyl carbonate, methyl ethyl carbonate, vinylene carbonate, vinyl ethylene carbonate, ethylene carbonate, propylene carbonate, butylene carbonate, dipropyl carbonate, $\gamma$-butyrolactone, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

When the solvent is the above-described aprotic organic solvent, doping of the electrode 1 can be efficiently achieved. Use of the doped electrode 1A obtained by doping the electrode 1 using the above-described aprotic organic solvent can produce a rechargeable battery with a high battery stability.

The aprotic organic solvent is preferably an organic solvent of a specific group. Examples of the organic solvent of a specific group preferably include dimethyl carbonate, diethyl carbonate, methyl ethyl carbonate, vinylene carbonate, vinyl ethylene carbonate, ethylene carbonate, and propylene carbonate. Among those organic solvents of a specific group, dimethyl carbonate, ethylene carbonate, and methyl ethyl carbonate are more preferable, and using a combination of at least dimethyl carbonate and ethylene carbonate is particularly preferable.

When at least dimethyl carbonate and ethylene carbonate are combined and used as the organic solvent of a specific group, a volume ratio of dimethyl carbonate to the organic solvent is preferably 30% or higher, and more preferably 50% or higher, and particularly preferably 70% or higher. Use of the doped electrode 1A obtained by doping the electrode 1 using the organic solvent having the composition above can produce a rechargeable battery with a high battery stability.

When the solvent is the organic solvent of a specific group, doping of the electrode 1 can be particularly efficiently achieved. Moreover, use of the doped electrode 1A obtained by doping the electrode 1 using the organic solvent of a specific group can produce a rechargeable battery with a particularly high battery stability.

As the organic solvent, an ionic solution such as quaternary imidazolium salt, quaternary pyridinium salt, quaternary pyrrolidinium salt, and quaternary piperidinium salt can also be used. The organic solvent may consist of a single component. Alternatively, the organic solvent may be a mixed solvent consisting of two or more kinds of components.

The alkali metal ions contained in the dope solution are ions forming an alkali metal salt. The alkali metal salt is preferably a lithium salt or a sodium salt. Examples of an anionic moiety forming the alkali metal salt include phosphorus anion having a fluoro group such as $PF_6^-$, $PF_3(C_2F_5)_3^-$, and $PF_3(CF_3)_3^-$; boron anion having a fluoro group or a cyano group such as $BF_4^-$, $BF_2(CF)_2^-$, $BF_3(CF_3)^-$, and $B(CN)_4^-$; sulfonyl imide anion having a fluoro group such as $N(FSO_2)_2^-$, $N(CF_3SO_2)_2^-$, and $N(C_2F_5SO_2)_2^-$, and organic sulfone acid anion having a fluoro group such as $CF_3SO_3^-$.

In the dope solution, the alkali metal salt has a concentration of within a range of preferably 0.1 mol/L or higher, and more preferably from 0.5 to 1.5 mol/L. When the concentration of the alkali metal salt falls within this range, pre-doping with the alkali metal proceeds efficiently.

The dope solution may further contain additives such as vinylene carbonate, vinyl ethylene carbonate, fluoroethylene carbonate, 1-(trifluoromethyl) ethylene carbonate, succinic anhydride, maleic anhydride, propane sultone, and diethyl sulfone. An added amount of such additives is preferably 5% by mass or less with respect to the dope solution in a mass ratio, and more preferably 3% by mass or less.

The dope solution may further contain a flame retardant, such as a phosphazene compound. From the viewpoint of effective control of a thermal runaway reaction during doping with the alkali metal, an added amount of the flame retardant is preferably 1 part by mass or more, more preferably 3 parts by mass or more, and further preferably 5 parts by mass or more, with respect to 100 parts by mass of the dope solution. From the viewpoint of obtaining the high-quality doped electrode 1A, the added amount of the flame retardant is preferably 20 parts by mass or less, more preferably 15 parts by mass or less, and further preferably 10 parts by mass or less, with respect to 100 parts by mass of the dope solution.

4. Method for Manufacturing Doped Electrode 1A Using Electrode Manufacturing System 11

A method for manufacturing the doped electrode 1A is as follows. The electrode 1 that has not yet been pre-doped is wound around the supply roll 101. Subsequently, the electrode 1 that has not yet been pre-doped is drawn out from the supply roll 101, and is fed to the winding roll 103 along the path described above. Subsequently, the electrolyte solution treatment tank 15, the doping tanks 17, 19, 21, and the cleaning tanks 23A, 23B, 23C are raised and set at specified positions shown in FIG. 3.

Subsequently, the dope solution is stored in the electrolyte solution treatment tank 15 and the doping tanks 17, 19, 21. The dope solution is the dope solution described in the above section entitled "3. Composition of Dope Solution". When the cleaning path is selected to be the conveying path, the cleaning solution is stored in the cleaning tanks 23A, 23B, 23C.

Subsequently, the electrode 1 is conveyed from the supply roll 101 to the winding roll 103 along the above-described path by the group of conveyor rollers. The path to convey the electrode 1 is a path passing through the doping tanks 17, 19, 21. During the electrode 1 passing through the doping tanks 17, 19, 21, the active material contained in each active material layer 5 is pre-doped with the alkali metal.

Moreover, when the cleaning path is selected to be the conveying path, the electrode 1 is conveyed to at least one of the cleaning tank 23A, 23B, or 23C by the group of conveyor rollers. The electrode 1 is cleaned inside at least one of the cleaning tank 23A, 23B, or 23C while being conveyed by the group of conveyor rollers.

The electrode 1 is continuously conveyed to the tab cleaner 117 by the group of conveyor rollers. That a part of the electrode 1 is conveyed to the tab cleaner 117 means that such a part has been already subjected to a pre-doping process and turned into the doped electrode 1A. The tab cleaner 117 cleans the active material layer unformed portion 7 of the doped electrode 1A.

The doped electrode 1A may be a positive electrode or a negative electrode. When the positive electrode is manufactured, the positive electrode active material is doped with the alkali metal in the electrode manufacturing system 11. When the negative electrode is manufactured, the negative electrode active material is doped with the alkali metal in the electrode manufacturing system 11.

When lithium is occluded in the negative electrode active material of the lithium ion capacitor, a doping amount of the alkali metal is preferably from 70% to 95% with respect to a theoretical capacity of the negative electrode active material. When lithium is occluded in the negative electrode active material of the lithium-ion rechargeable battery, the doping amount of the alkali metal is preferably 10% to 30% with respect to the theoretical capacity of the negative electrode active material.

5. Manufacturing Method of Rechargeable Battery

Examples of the rechargeable battery include the lithium-ion rechargeable battery. The rechargeable battery comprises an electrode cell. The electrode cell has a layered structure of the negative electrode and the positive electrode. The negative electrode of the rechargeable battery is manufactured in accordance with, for example, the section entitled "4. Method for Manufacturing Doped Electrode 1A Using Electrode Manufacturing System 11". Subsequently, the negative electrode and the positive electrode are layered to form the electrode cell.

6. Effects to be Exhibited by Method for Manufacturing Doped Electrode and Method for Manufacturing Rechargeable Battery

(6-1) When the cleaning-omitted path is selected to be the conveying path for the electrode 1, the doped electrode 1A having the dope solution deposited thereon can be dried in the long-distance drying path KL or in the short-distance drying path KS. Drying means to remove the solvent of the dope solution. The doped electrode 1A dried contains the residual component of 5 parts by mass or more and 40 parts by mass or less with respect to 100 parts by mass of the active material layer 5. Use of the doped electrode 1A containing the residual component allows manufacture of the rechargeable battery with a high battery stability.

The doped electrode 1A dried contains the residual component of preferably 10 parts by mass or more and 30 parts by mass or less with respect to 100 parts by mass of the active material layer 5, and more preferably 15 parts by mass or more and 25 parts by mass or less, and particularly preferably 15 parts by mass or more and 20 parts by mass or less, with respect to 100 parts by mass of the active material layer 5.

When the doped electrode 1A dried contains the residual component of 10 parts by mass or more and 30 parts by mass or less with respect to 100 parts by mass of the active material layer 5, a rechargeable battery with a higher battery stability can be manufactured. When the doped electrode 1A dried contains the residual component of 15 parts by mass or more and 25 parts by mass or less with respect to 100 parts by mass of the active material layer 5, a rechargeable battery with a particularly high battery stability can be manufactured.

(6-2) When the cleaning-omitted path is selected to be the conveying path for the electrode 1, a process to clean the doped electrode 1A is not required, which increases productivity of the doped electrode 1A.

Even when the cleaning path is selected to be the conveying path for the electrode 1, the productivity of the doped electrode 1A is high if at least one of the cleaning tank 23A, 23B, or 23C is not used, as compared to a case where all the cleaning tanks 23A, 23B, 23C are used.

(6-3) The doped electrode 1A containing the residual component can be manufactured by an electrode manufacturing system that does not comprise a cleaning mechanism, such as the cleaning tanks 23A, 23B, 23C. Thus, the electrode manufacturing system can be downsized.

7. Examples

(Example 1)

(i) Manufacture of Electrode 1

A current collector 3 having a long strip-shape was prepared. The current collector 3 was the negative electrode current collector. The size of the current collector 3 was 130 millimetres (mm) in width, 100 metres (m) in length, and 8 micrometres ($\mu$m) in thickness. The surface roughness Ra of the current collector 3 was 0.1 $\mu$m. The current collector 3 was made from copper foil. The active material layers 5 were formed on respective opposing sides of the current collector 3. Each active material layer 5 was a negative-electrode active material layer.

The amount of application of the active material layer 5 on one side of the current collector 3 was 100 g/m$^2$. As illustrated in FIG. 1, the active material layer 5 was formed along a longitudinal direction of the current collector 3. The active material layer 5 was formed from one end of the current collector 3 in the width direction W for 120 mm in width. The active material layer unformed portion 7 at the other end of the current collector 3 in the width direction W had a width of 10 mm. The active material layer unformed portion 7 is a portion where each active material layer 5 is not formed. Then, after drying and pressing, the electrode 1 was obtained.

The active material layer 5 contained the negative electrode active material, carboxymethyl cellulose, acetylene black, a binder, and a dispersant at a mass ratio of 88:3:5:3:1. The negative electrode active material was a mixture of a Si-based active material and a graphite-based active material. The negative electrode active material contained the Si-based active material and the graphite-based active material at a mass ratio of 2:8. The acetylene black corresponds to the conductive agent.

(ii) Manufacture of Counter Electrode Members 137, 139, 141, 143

A resin film made from polypropylene (PP) was attached to a copper plate. The size of the copper plate was 1000 mm in length, 220 mm in width, and 3 mm in thickness. The size of the resin film was 810 mm in length, 120 mm in width, and 470$\mu$m in thickness. The resin film was in the form of a mesh including multiple apertures. The aperture ratio of the resin film was 50%.

A Li foil was attached to the resin film. The length and the width of the Li foil were the same as those of the resin film. The thickness of the Li foil was 2 mm. The resin film and the Li foil were pressed and attached to the copper plate with a roll press device under a linear pressure of 5 kgf/cm to thereby obtain the counter electrode members 137, 139, 141, 143. The copper plate corresponds to the conductive base material 153. The Li foil corresponds to the alkali metal-containing plate 155.

(iii) Manufacture of Doped Electrode 1A

The electrode manufacturing system 11 illustrated in FIG. 3 was prepared, and the electrode 1 was fed through the electrode manufacturing system 11. The counter electrode members 137, 139, 141, 143 are disposed in each of the doping tanks 17, 19, 21. Subsequently, the doping tanks 17, 19, 21 are supplied with the dope solution therein. The dope solution was a solution containing 1.2 mol/L (M) of LiPF$_6$. The solvent of the dope solution was a mixed solution consisting of EC (ethylene carbonate) and DMC (dimethyl carbonate) at a volume ratio of 3:7. The composition of the dope solution 1 according to Example 1 is referred to as "D1". The doping tanks 17, 19, 21 were placed in a state where the dope solution and the counter electrode members 137, 139, 141, 143 are stored therein. The conveying path for the electrode 1 was the cleaning-omitted path and the short-distance drying path KS.

Subsequently, the electrode 1 fed through the electrode manufacturing system 11 and the counter electrode members 137, 139, 141, 143 were connected to a direct current power source with a current/voltage monitor. A current of 154 ampere (A) was conducted through the entire electrode manufacturing system 11 with the electrode 1 being conveyed at a speed of 1.24 m/min. At this time, the current density per unit area of the electrode 1 during pre-doping was 10 mA/cm$^2$. Furthermore, at this time, the center in the width direction W of the active material layer 5 included in the electrode 1 matched the center in the width direction W of the Li foil included in the counter electrode members 137, 139, 141, 143. Still further, at this time, there was no observation of continuous voltage increase even through pre-doping was continuously performed. The pre-doping could be performed with a voltage stable at 3.0 voltage (V).

The doped electrode 1A passed through the doping tank 21, and thereafter traveled to the tab cleaner 117 without passing toward the cleaning tanks 23A, 23B, 23C. After having passed through the tab cleaner 117, the doped electrode 1A traveled through the short-distance drying path KS. At the time when the doped electrode 1A entered the short-distance drying path KS, the doped electrode 1A had the dope solution deposited on its surface. In the short-distance drying path KS, the two or more blowers 213 blew the gas to the doped electrode 1A and dried the doped electrode 1A. The gas blown from the two or more blowers 213 was nitrogen. The flow rate of one blower 213 was 5 L/min. The total number of the blowers 213 were eighteen (18). In Example 1, the number of the blowers 213 that had blown gas to the doped electrode 1A was six (6).

(iv) Calculation of Mass Ratio X

A mass ratio X of the doped electrode 1A obtained was calculated. The mass ratio X (%) is a value calculated by Formula 1 as follows:

$$[\text{Formula 1}] \quad X = (a/b) \times 100$$

where "*a*" is a mass per unit area of the solvent, which is expressed in the unit of $g/cm^2$; and "b" is a mass per unit area of the active material layer, which is expressed in the unit of $g/cm^2$.
The mass per unit area *a* of the solvent can be calculated as follows. A sample having a diameter of 16 mm was punched out from the doped electrode 1A with a hand punch manufactured by Nogami Giken Co., Ltd. The initial mass wa1 of the sample was measured with an electronic analytical scale. Subsequently, the sample was cleaned well with a DMC solvent, and then dried. A mass wa2 of the sample dried was measured with the electronic analytical scale. The unit of wa1 and wa2 is gram (g). The mass per unit area *a* of the solvent was calculated by Formula 2 as follows:

$$[\text{Formula 2}] \quad a = (wa1 - wa2)/S$$

where "S" is the area of the sample having the diameter of 16 mm, which is expressed in the unit of $cm^2$.
The mass per unit area b of the active material layer is calculated by Formula 3 as follows:

$$[\text{Formula 3}] \quad b = (wa2 - wa3)/S$$

where "*wa3*" is a mass of the sample having a diameter of 16 mm, which was punched out from the current collector 3. The unit of wa3 is gram (g).
The mass ratio X of the doped electrode 1A was 17% as shown in Table 1. It should be noted that the mass of the residual component is approximately equal to the mass per unit area *a* of the solvent as discussed above. Thus, the mass ratio X represents a ratio of the mass of the residual component with respect to the mass of the active material layer 5. That is, the doped electrode 1A obtained contains, with respect to 100 parts by mass of the active material layer 5, the component of the dope solution in a numerical value based on the mass ratio X.

[Table 1]

| | Example 1 | Example 2 | Example 3 | Example 4 | Example 5 | Example 6 | Example 7 | Comparative Example 1 | Comparative Example 2 |
|---|---|---|---|---|---|---|---|---|---|
| Composition of Dope Solution | D1 | D1 | D1 | D1 | D2 | D3 | D4 | D1 | D1 |
| The Number of Cleaning Tanks through which Doped Electrode Passes | 0 | 1 | 1 | 0 | 0 | 0 | 0 | 3 | 0 |
| Drying Process | Included (Short) | Included (Short) | Included (Long) | Included (Short) | Included (Short) | Included (Short) | Included (Short) | Included (Short) | None |
| Mass Ratio X (%) | 17 | 12 | 8 | 27 | 21 | 22 | 17 | 3 | N/A |
| Battery Stability | A | B | B | B | B | B | B | C | N/A |
| Productivity | A | A | B | A | A | A | A | N/A | × |

In Table 1, the term "Included (short)" in the line entitled "Drying process" means that the doped electrode 1A had passed through the short-distance drying path KS. The term "Included (long)" means that the doped electrode 1A had passed through the long-distance drying path KL. The term "None" means that the doped electrode 1A had neither passed through the long-distance drying path KL nor the short-distance drying process KS. The smaller the number of cleaning tanks through which the doped electrode 1A passes is, the greater the mass ratio X is. When the doped electrode 1A passes through the short-distance drying path KS, the mass ratio X is higher as compared to a case where the doped electrode 1A passes through the long-distance drying path KL.

(v) Evaluation of Battery Stability

The battery stability of the doped electrode 1A was evaluated by the following method. A part of the doped electrode 1A was punched out with a Thomson blade manufactured by Takahashi Keisei Corporation. The part punched out was prepared as the negative electrode. The basic form of the negative electrode was a shape of rectangle having 2.6 centimetres (cm) in vertical length and 4.0 centimetres (cm) in lateral length. The negative electrode comprised a terminal weld part protruding outward of its outer periphery from one side of the rectangle. The negative electrode was exposed to an environment within a glovebox having a dew point of -45°C for five hours.
Subsequently, the negative electrode was brought into a dry room having a dew point of -60°C. The negative electrode was used to prepare a first half cell for evaluation within the dry room. The method for preparing the first half cell for evaluation is as follows.
On one side of the negative electrode, a separator, a counter electrode, and a separator were layered in this order. On the opposite side of the negative electrode, a separator, a counter electrode, and a separator were layered in this order. As a result, a laminate was obtained. The separator was made of a polyethylene non-woven fabric having a thickness of 35 μm. The counter electrode was made by attaching metal lithium to an expanded copper foil. The basic form of the expanded copper foil is a shape of rectangle having 2.6 cm in vertical length and 3.9 cm in lateral length. The expanded copper foil comprised a terminal weld part protruding outward of its outer periphery from one side of the rectangle.
Subsequently, the four sides of the laminate were taped. Then, the terminal weld part of the negative electrode and the terminal weld part of the counter electrode were ultrasonic-welded to a copper terminal, which has the size of 5 mm in width, 50 mm in length, and 0.2 mm in thickness.
Subsequently, the laminate was interposed between two sheets of laminate films. Each laminate film had a rectangular shape. The size of the laminate film was 6.5 cm in vertical length and 8.0 cm in lateral length. Three sides among four sides of one laminate film and three sides among four sides of the other laminate film were fusion-joined to one another. Consequently, the two sheets of the laminate films turned into a bag with only one side open. The laminate was stored inside the bag.
Subsequently, the laminate inside the bag was impregnated with an electrolyte solution by vacuum impregnation. The electrolyte solution contained 1.2 M of LiPF$_6$. A solvent of the electrolyte solution was a mixed solution consisting of EC (ethylene carbonate) and DMC (dimethyl carbonate) at a volume ratio of 3:7.
Subsequently, one of the four sides, which had not yet been fusion-joined, was closed by fusion bonding. In accordance with the above processes, the first half cell for evaluation was completed. Moreover, a second half cell for evaluation was prepared in accordance with a method basically the same as the method for preparing the first half cell for evaluation. It should be noted that, in preparation of the second half cell for evaluation, a negative electrode that had not been exposed to dry air having a dew point of -45°C was used.
The first half cell for evaluation and the second half cell for evaluation correspond to the rechargeable battery. The method for preparing the first half cell for evaluation and the method for preparing the second half cell for evaluation correspond to the method for manufacturing the rechargeable battery.
The first half cell for evaluation and the second half cell for evaluation were introduced inside a constant temperature tank having a temperature of 25°C. Then, an initial charge and discharge efficiency E, expressed in Formula 4 in the unit of percentage (%), of each of the first half cell for evaluation and the second half cell for evaluation was calculated as follows:

$$[\text{Formula 4}]\ E=(C1/C2)\times100$$

where "C7" is the initial discharge capacity; and "C2" is the initial charge capacity. The unit of each of C1 and C2 is mAh/cm$^2$. The initial discharge capacity C1 is defined as a capacity available when, after being charged at a constant current of 10 mA until a cell voltage reaches 0.01 V, the cell is continued to be charged until a current value decreases to 1 mA with a constant voltage of 0.01V being applied. The initial charging capacity C2 is defined as a capacity available when, subsequent to measurement of the initial discharge capacity C1, the cell is discharged at a constant current of 10 mA until the cell voltage reaches 2.0 V.

The initial charge and discharge efficiency E of the first half cell for evaluation was 99%; and the initial charge and discharge efficiency E of the second half cell for evaluation was 100%.

Based on a value of the initial charge and discharge efficiency E of the first half cell for evaluation, the battery stability was evaluated in accordance with the following criteria. An evaluation result is shown in Table 1 above.

(Evaluation Criteria of Battery Stability)

> A: The initial charge and discharge efficiency is 98.5% or higher.
> B: The initial charge and discharge efficiency is 95.5 percent or higher and less than 98.5%.
> C: The initial charge and discharge efficiency is less than 95.5%.

(vi) Evaluation on Productivity

A time period, from when the electrode 1 starts being drawn out from the supply roll 101 until the doped electrode 1A is wound around the winding roll 103, is defined as "operation time T". An operation time ratio TR, which is expressed in Formula 5 in the unit of percent (%), was calculated as follows:

$$[\text{Formula 5}] \ TR=(T/T_{r1})\times100$$

where "$T_{r1}$" is the operation time T according to Comparative Example 1 to be described later. Based on a value of the operation time ratio TR, the productivity was evaluated in accordance with the following criteria. An evaluation result is shown in Table 1 above.

[Evaluation Criteria of Productivity]

> A: The operation time ratio TR is less than 70%.
> B: The operation time ratio TR is 70% or higher and 80% or lower.

[Example 2]

The doped electrode 1A was manufactured in a basically similar manner as in Example 1 and evaluated, except that the conveying path for the electrode 1 was the cleaning path. The doped electrode 1A passed through the cleaning tank 23A, but did not pass through the cleaning tanks 23B, 23C.

In Example 2, the mass ratio X was 12%. The initial charge and discharge efficiency E of the first half cell for evaluation was 98%. The initial charge and discharge efficiency E of the second half cell for evaluation was 100%. The evaluation result on the productivity was A.

[Example 3]

The doped electrode 1A was manufactured in a basically similar manner as in Example 1 and evaluated, except that the conveying path for the electrode 1 was the cleaning path. The doped electrode 1A passed through the cleaning tank 23A, but did not pass through the cleaning tanks 23B, 23C. The conveying path for the electrode 1 was the long-distance drying path KL. The number of the blowers 213 to blow the gas to the doped electrode 1A was eighteen (18).

In Example 3, the mass ratio X was 8%. The initial charge and discharge efficiency E of the first half cell for evaluation was 97%. The initial charge and discharge efficiency E of the second half cell for evaluation was 100%. The evaluation result on the productivity was B.

[Example 4]

The doped electrode 1A was manufactured in a basically similar manner as in Example 1 and evaluated, except that the flow rate of one blower 213 was 2.5 L/min.

In Example 4, the mass ratio X was 27%. The initial charge and discharge efficiency E of the first half cell for evaluation was 98%. The initial charge and discharge efficiency E of the second half cell for evaluation was 100%. The evaluation result on the productivity was A.

[Example 5]

The doped electrode 1A was manufactured in a basically similar manner as in Example 1 and evaluated, except that the composition of the dope solution to be supplied into the doping tanks 17, 19, 21 was different. The dope solution in Example 5 was a solution containing 1.2M of $LiPF_6$. The solvent of the dope solution was a mixed solution consisting of EC (ethylene carbonate), EMC (ethyl methyl carbonate), and DMC (dimethyl carbonate) at a volume ratio of 1:1:1. The composition of the dope solution in Example 5 was referred to as "D2".
In Example 5, the mass ratio X was 21%. The initial charge and discharge efficiency E of the first half cell for evaluation was 98%. The initial charge and discharge efficiency E of the second half cell for evaluation was 100%. The evaluation result on the productivity was A.

[Example 6]

The doped electrode 1A was manufactured in a basically similar manner as in Example 1 and evaluated, except that the composition of the dope solution to be supplied into the doping tanks 17, 19, 21 was different. The dope solution in Example 6 was a solution containing 1.4M of $LiPF_6$. The solvent of the dope solution was a mixed solution containing EC (ethylene carbonate) and DMC (dimethyl carbonate) at a volume ratio of 3:7, with 1% by mass of FEC (fluoroethylene carbonate) added in mass ratio. The composition of the dope solution in Example 6 is referred to as "D3".
In Example 6, the mass ratio X was 22%. The initial charge and discharge efficiency E of the first half cell for evaluation was 99%. The initial charge and discharge efficiency E of the second half cell for evaluation was 100%. The evaluation result on the productivity was A.

[Example 7]

The doped electrode 1A was manufactured in a basically similar manner as in Example 1 and evaluated, except that the composition of the dope solution to be supplied into the doping tanks 17, 19, 21 was different. The dope solution in Example 7 was a solution containing 1.2M of $LiPF_6$. The solvent of the dope solution was a mixed solution containing EC (ethylene carbonate) and DMC (dimethyl carbonate) at a volume ratio of 3:7, with 5 % by mass of FEC (fluoroethylene carbonate) added in mass ratio. The dope solution in Example 7 is referred to as "D4".
In Example 7, the mass ratio X was 17%. The initial charge and discharge efficiency E of the first half cell for evaluation was 99%. The initial charge and discharge efficiency E of the second half cell for evaluation was 100%. The evaluation result on the productivity was A.

[Comparative Example 1]

The doped electrode 1A was manufactured in a basically similar manner as in Example 1 and evaluated, except that the conveying path for the electrode 1 was the cleaning path. The doped electrode 1A passed through the cleaning tanks 23A, 23B, 23C.
In Comparative Example 1, the mass ratio X was 3%. The initial charge and discharge efficiency E of the first half cell for evaluation was 95%. The initial charge and discharge efficiency E of the second half cell for evaluation was 100%. The evaluation result on the productivity was C.

[Comparative Example 2]

The doped electrode 1A was manufactured in a basically similar manner as in Example 1, except that the doped electrode 1A neither passed through the long-distance drying path KL nor the short-distance drying path KS. Consequently, the two or more blowers 213 did not blow gas to the doped electrode 1A.
The evaluation could not be performed because precipitate from the dope solution was deposited on conveyer rollers subsequent to the doping tank 17, resulting in breakage of the electrode 1.

<Other Embodiments>

Although the embodiment of the present disclosure has been described hereinabove, the present disclosure is not limited to the embodiment above, and may be practiced in various forms.

(1) A function served by a single element of each of the above-described embodiments may be achieved by two or more elements, or a function served by two or more elements may be achieved by a single element. Also, a part of a configuration in each of the above-described embodiments may be omitted. Further, at least a part of a configuration in each of the above-described embodiments may be added to, or replace, another configuration in each of the above-described embodiments.

(2) In addition to the method for manufacturing a doped electrode and a method for manufacturing a rechargeable battery, the present disclosure may be implemented in various forms, such as a doped electrode, a rechargeable battery, and a system for manufacturing an electrode.

**Claims**

1. A method for manufacturing a rechargeable battery by using a doped electrode including an active material layer doped with an alkali metal, the method comprising:

   conveying an electrode including the active material layer along a path passing through a doping tank that stores (i) a dope solution containing ions of the alkali metal and an aprotic organic solvent and (ii) a counter electrode member, to thereby manufacture the doped electrode;
   drying the doped electrode exiting the doping tank such that the doped electrode contains a component of the dope solution of 5 parts by mass or more and 40 parts by mass or less with respect to 100 parts by mass of the active material layer; and
   using the doped electrode dried to thereby manufacture the rechargeable battery.

2. A method for manufacturing a doped electrode including an active material layer doped with an alkali metal, the method comprising:

   conveying an electrode including the active material layer along a path passing through a doping tank that stores (i) a dope solution containing ions of the alkali metal and an aprotic organic solvent and (ii) a counter electrode member, to thereby manufacture the doped electrode; and
   drying the doped electrode exiting the doping tank such that the doped electrode contains a component of the dope solution of 5 parts by mass or more and 40 parts by mass or less with respect to 100 parts by mass of the active material layer.

3. The method for manufacturing a doped electrode according to claim 2, the alkali metal is electrically doped into the active material layer inside the doping tank using the counter electrode member provided to face the electrode.

4. The method for manufacturing a doped electrode according to claim 2 or 3,
   wherein at least one of gas selected from a group consisting of helium gas, neon gas, argon gas, and nitrogen is blown to the doped electrode, to thereby dry the doped electrode exiting the doping tank.

5. The method for manufacturing a doped electrode according to any one of claims 2 to 4,
   wherein the aprotic organic solvent is at least one selected from a group consisting of dimethyl carbonate, diethyl carbonate, methyl ethyl carbonate, vinylene carbonate, vinyl ethylene carbonate, ethylene carbonate, propylene carbonate, butylene carbonate, dipropyl carbonate, $\gamma$-butyrolactone, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

6. The method for manufacturing a doped solution according to any one of claims 2 to 4,
   wherein the aprotic organic solvent is at least one selected from a group consisting of dimethyl carbonate, diethyl carbonate, methyl ethyl carbonate, vinylene carbonate, vinyl ethylene carbonate, ethylene carbonate, and propylene carbonate.

1

5

3

L

W

II
II

7    6

FIG. 1

FIG. 2

FIG. 3

FIG. 4

FIG. 5

| **INTERNATIONAL SEARCH REPORT** | International application No. |
|---|---|
| | **PCT/JP2021/039179** |

**A.    CLASSIFICATION OF SUBJECT MATTER**

*H01M 4/139*(2010.01)i; *H01G 11/06*(2013.01)i; *H01G 11/50*(2013.01)i; *H01G 11/86*(2013.01)i
FI:    H01M4/139; H01G11/06; H01G11/50; H01G11/86

According to International Patent Classification (IPC) or to both national classification and IPC

**B.    FIELDS SEARCHED**

Minimum documentation searched (classification system followed by classification symbols)

H01M4/139; H01G11/06; H01G11/50; H01G11/86

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

Scopus

**C.    DOCUMENTS CONSIDERED TO BE RELEVANT**

| Category* | Citation of document, with indication, where appropriate, of the relevant passages | Relevant to claim No. |
|---|---|---|
| Y | JP 2018-113447 A (JSR CORP) 19 July 2018 (2018-07-19)<br>claims, paragraphs [0045], [0052], [0057], [0082] | 1-6 |
| Y | JP 2016-189331 A (SHINETSU CHEMICAL CO) 04 November 2016 (2016-11-04)<br>paragraph [0050] | 1-6 |
| A | JP 2012-049543 A (SAMSUNG ELECTRO-MECHANICS CO LTD) 08 March 2012<br>(2012-03-08) | 1-6 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| | | | International application No.<br>**PCT/JP2021/039179** | |
|---|---|---|---|---|

| Patent document<br>cited in search report | | | Publication date<br>(day/month/year) | Patent family member(s) | Publication date<br>(day/month/year) |
|---|---|---|---|---|---|
| JP | 2018-113447 | A | 19 July 2018 | US        2019/0074143        A1<br>claims, paragraphs [0052],<br>[0060], [0066], [0090]<br>WO        2017/146223        A1<br>EP              3422377        A1<br>CN            108701553        A<br>KR    10-2018-0114063        A | |
| JP | 2016-189331 | A | 04 November 2016 | US        2015/0115206        A1<br>paragraph [0083]<br>WO        2013/168727        A1<br>KR    10-2015-0020185        A<br>CN            104471757        A | |
| JP | 2012-049543 | A | 08 March 2012 | US        2012/0048739        A1<br>KR    10-2012-0020222        A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020187146 A
- JP 10308212 A
- JP 2008077963 A
- JP 2012049543 A
- JP 2012049544 A

- JP 2009246137 A
- JP 2013258392 A
- JP 2005123175 A
- JP 2006107795 A